# EUROPEAN PATENT SPECIFICATION

(11) **EP 4 470 238 B1**
(45) Date of publication and mention of the grant of the patent: **02.07.2025**
(21) Application number: 22708354.0
(22) Date of filing: 26.01.2022
(51) Int. Cl.: H04W 4/90, H04W 4/38, H04W 4/029

(54) **EMERGENCY CALL WITH IOS DATA**
NOTRUF MIT IOS-DATEN
APPEL D'URGENCE AVEC DES DONNÉES IOS

(43) Date of publication of application: 04.12.2024
(73) Proprietor: Telefonaktiebolaget LM Ericsson (publ), 164 83 Stockholm (SE)
(72) Inventor: GAITO, Daniele, 80131 Napoli (NA) (IT); PATRIA, Gaetano, 81054 San Prisco (CE) (IT); ATTANASIO, Francesco, 84086 Roccapiemonte (SA) (IT)
(74) Representative: Ericsson
(86) International application number: PCT/EP2022/051780
(87) International publication number: WO 2023/143712

(56) References cited:
- EP-A1- 3 391 674
- US-A1- 2015 065 077
- US-A1- 2017 124 834
- US-A1- 2021 203 768

## Description

### Technical Field

The present application relates to a method for operating a mobile entity, a method for operating a call handling entity and a method carried out at an emergency call-center. Furthermore, the corresponding entities, the mobile entity, the call handling entity and the emergency call center are provided. Additionally a system comprising at least 2 of these entities is provided, a computer program comprising program code and a carrier comprising the computer program.

### Background

### 6G

6G is the sixth generation of wireless technology. A 6G network follows up on 4G and 5G, building on the revamped infrastructure and advanced capacity currently being established on millimeter-wave 5G networks. Using higher-frequency radio bands, it will give networks much faster speeds and lower latency, able to support sophisticated mobile devices and systems.

Technologies such as Artificial Intelligence (Al)/Machine Learning (ML), Quantum Communication (QC)/Quantum Machine Learning (QML), blockchain, tera-Hertz and millimeter waves communication, tactile Internet, Non-Orthogonal Multiple Access (NOMA), small cells communication, fog/edge computing, etc., will be the key technologies in the realization of beyond 5G (B5G) and 6G communications.

New applications prospects like the Internet of Senses (IoS), merging communication with sensing capabilities, offer new application horizons to connectivity systems.

Because of the multiplicity of use cases potentially generating massive amounts of data, 6G systems will also have to natively incorporate analytics and intelligence capabilities beyond each of existing systems, in view of enabling real time decision making on high data volumes potentially originating from very large collection of sensors. Connected intelligence is hence expected to become a distinguishing feature of 6G systems, both at the service of the 6G platform performance and efficiency and at the service of the vertical use cases running on top of it. At the same time, the very large volumes of data that will have to be processed by 6G system in a multiplicity of business-critical applications calls for ultrahigh levels of security whilst respecting trust and data privacy.

The network envisioned with 6G ecosystem will enable the Internet of Senses (IoS) providing the proper level of cyber security, in terms of data integrity and trustworthiness of the infrastructure and would be compliant with regulatory specifications.

6G devices will be provided not only *with* electronic Senses technology but will also be able to remotely reproduce the senses, for example during a phone call it will be possible not only to see who you are talking to but also to share smells.

### Emergency Call (EC)

Emergency call is a telephone request for service which requires immediate action to prevent loss of life, reduce bodily injury, prevent, or reduce loss of property and respond to other emergency situations determined by local policy. Emergency Call is a Call made to either '999' or '112' and any other number associated with emergency services.

EC Center is a Public Safety Answering Point (PSAP) where all ECs are conveyed and handled by EC Operators. AN EC Operator is a dedicated and skilled person which answers an EC.

### False Emergency Call

A false emergency call is when somebody contacts the emergency services just to ask or speak about something that is not a real emergency.

As described in the table below, false ECs can be of two types:
- Unintentional
- Deliberate.

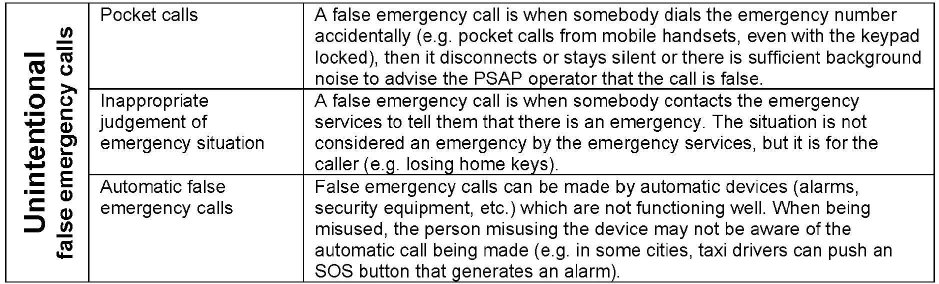

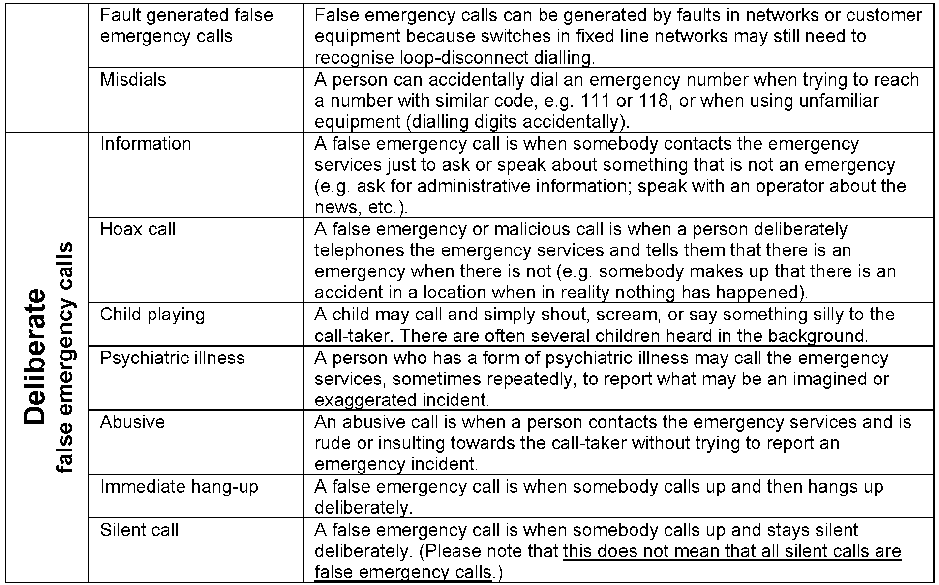

During an Emergency Call (EC) all info about the surrounding environment and the involved people can be useful to provide a faster and adequate response to the emergency. Many times, the caller does not provide all information, mainly due to fear, emotion, shame, forgetfulness or simply because due to the rush and excitement of the moment she/he did not have the opportunity to check all the information.

In addition, it is not easy for the operator reached by the call to distinguish immediately the "high" priority ECs from "false", "normal" or "low" priority ECs. The time spent to do this investigation is sometime fundamental to save lives.

Accordingly, a need exists to further improve the situation in an emergency call, especially to make sure that the available information is transmitted as complete as possible and quickly transmitted to the Emergency call center.

US 2021/203768 A1 discloses generation of an alarm via a smartphone, wherein a support application on the smartphone collects information linked to the environment from sensors of the smartphone and determines an emergency situation based on a contextual analysis of the sensor information. Therefore the support application may activate specific sensors of the smartphone.

US 2017/124834 A1 relates to collection of surveillance data which can then be shared with an operations center or first responders in case of an emergency. The main focus of the disclosure lies on secure collection, storage and sharing of such surveillance data in order to prevent misuse and to balance needs of privacy with those of safety.

EP 3 391 674 A1 discloses systems and methods for emergency data communication. Therein, an emergency call server receiving an indication of an emergency condition at a device may determine whether the device is to be tracked based on the indication and trigger a tracking session at the device in order to periodically collect and send tracking session data to one or more servers. The tracking session is separate from the emergency call session itself. The tracking data may include position of the device as well as data regarding the medical condition of the user provided by biometric sensors on user-wearable devices.

### Summary

According to a first aspect a method is provided carried out at a call handling entity configured to handle an emergency call of the mobile entity in the cellular network. The method comprises the step of determining that a call from the mobile entity is an emergency call. Furthermore, the call handling entity determines a location of the mobile entity and determines at least one sensor located in an environment of the mobile entity close to the mobile entity but not connected to the mobile entity. Furthermore, the call handling entity determines whether the at least one sensor is activated to collect sensor data from an environment in which the at least one sensor is located. When the at least one sensor is not activated, the call handling entity automatically requests an activation of at least one sensor and requests the collection of sensor data at the at least one sensor. Furthermore, it requests to send the collected sensor data to an emergency call center handling the emergency call.

Furthermore, the corresponding call handling entity is provided, comprising a memory and at least one processing unit, wherein the memory contains instructions executable by the at least one processing unit. The call handling entity is operative to work as discussed above or as discussed in further detail below.

As an alternative, the call handling entity comprises a first module configured to determine that a call from the mobile entity is an emergency call. A second module of the call handling entity is configured to determine a location of the mobile entity and a third module is configured to determine at least one sensor located in an environment of the mobile entity close to the mobile entity but not connected to the mobile entity. A fourth module is configured to determine whether the at least one sensor is activated to collect sensor data from the environment in which the sensor is located. If this is not the case and the sensor is not activated, a fifth module is configured to request an activation of the at least one sensor, and a further module, the sixth module, can be configured to request the collection of sensor data at the at least one sensor. A seventh module can be configured to request a transmission of collected sensor data to the emergency call center handling the emergency call.

With the features described above the call handling entity can also help to make sure that all the available sensors provided in the environment of the mobile entity collect sensor data. The call handling entity can initiate the collection and transmission of the sensor data to the emergency call center so that the emergency call center is now provided with additional information helpful to assess the situation at the emergency location.

Furthermore, a method carried out at an emergency call center receiving emergency calls via a cellular network is provided, wherein the emergency call center receives an emergency call from the mobile entity. Furthermore, it is determined whether sensor data of at least one sensor configured to collect sensor data from an environment in which the mobile entity is located is received in addition to the emergency call. The emergency call center further determines that a specific type of sensor should be activated to collect the sensor data, and requests activation of a sensor of the specific type and a collection of the sensor data, wherein the sensor of the specific type is close to the mobile entity but not connected to the mobile entity.

Furthermore the corresponding emergency call center is provided comprising a memory including instructions and at least one processing unit. The call center comprises a memory and at least one processing unit and the memory contains instructions executable by the at least one processing unit. The emergency call center is operative to work as discussed above or as discussed in further detail below.

As an alternative, the emergency call center comprises a first module configured to receive an emergency call from a mobile entity. A second module is configured to determine whether sensor data of at least one sensor are configured to collect sensor data from an environment in which the mobile entity is located is received in addition to the emergency call. A third module is configured to determine that a specific type of sensor should be activated to collect the sensor data and the emergency call center, with a fourth module, requests an activation of a sensor of the specific type and a collection of the sensor data, wherein the sensor of the specific type is close to the mobile entity but not connected to the mobile entity. Furthermore, the emergency call center may request the transmission of the sensor data to the emergency call center.

Furthermore a system comprising a call handling entity and an emergency call center as described above is provided.

A computer program comprising program code is provided to be executed by at least one processing unit of the call handling entity or the emergency call center, wherein execution of the program code causes the at least one processing unit to carry out a method as mentioned above or as discussed in further detail below.

Furthermore a carrier is provided comprising the computer program as mentioned above, wherein the carrier is one of an electronic signal, optical signal, radio signal, and computer readable storage medium.

It is to be understood that the features mentioned above and features yet to be explained below can be used not only in the respective combinations indicated, but also in other combinations or in isolation without departing from the scope of the present invention. Features of the above-mentioned aspects and embodiments described below may be combined with each other in other embodiments unless explicitly mentioned otherwise.

### Brief description of the drawings

The foregoing and additional features and effects of the application will become apparent from the following detailed description when read in conjunction with the accompanying drawings in which like reference numerals refer to like elements.
Figure 1 shows a schematic architectural view of a system in which a mobile entity connected to different types of sensor initiates an emergency call and in which additional sensor data is transmitted to the emergency call center.
Figure 2 shows an example message exchange between the involved entities for an emergency call in which additional sensor data is collected.
Figures 3A to 3D show example flowcharts of methods carried out at a mobile entity when carrying out an emergency call with the additional selection and collection of sensor data.
Figures 4A to 4C show example flowcharts of method carried out at a call handling entity handling an emergency call in which additional sensor data are transmitted.
Figure 5A and 5B show example flowcharts of methods carried out at an emergency call center handling an emergency call in which additional sensor data is transmitted together with the emergency call, the audio data.
Figure 6 shows an example flowchart of a method carried out at a mobile entity during an emergency call in which additional sensor data is collected and transmitted.
Figure 7 shows an example flowchart of a method carried out at a call handling entity during an emergency call in which additional sensor data are collected and transmitted.
Figure 8 shows an example flowchart of a method carried out at an emergency call center during an emergency call in which additional sensor data are collected.
Figure 9 shows an example schematic representation of a mobile entity configured to provide additional sensor data for an emergency call.
Figure 10 shows another example schematic representation of a mobile entity configured to provide additional sensor data for an emergency call.
Figure 11 shows an example schematic representation of a call handling entity handling an emergency call with additional sensor data.
Figure 12 shows another example schematic representation of a call handling entity handling an emergency call with additional sensor data.
Figure 13 shows an example schematic representation of an emergency call center configured to handling an emergency call in which additional sensor data is collected.
Figure 14 shows another example schematic representation of an emergency call center configured to handle an emergency call in which additional sensor data is collected.

### Detailed Description

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are to be illustrative only.

The drawings are to be regarded as being schematic representations, and elements illustrated in the drawings are not necessarily shown to scale. Rather, the various elements are represented such that their function and general purpose becomes apparent to a person skilled in the art. Any connection or coupling between functional blocks, devices, components of physical or functional units shown in the drawings and described hereinafter may also be implemented by an indirect connection or coupling. A coupling between components may be established over a wired or wireless connection. Functional blocks may be implemented in hardware, software, firmware, or a combination thereof.

Within the context of the present application, the term "mobile entity" or "user equipment" (UE) refers to a device for instance used by a person (i.e. a user) for his or her personal communication. It can be a telephone type of device, for example a telephone or a Session Initiating Protocol (SIP) or Voice over IP (VoIP) phone, cellular telephone, a mobile station, cordless phone, or a personal digital assistant type of device like laptop, notebook, notepad, tablet equipped with a wireless data connection. The UE may also be associated with non-humans like animals, plants, or machines. A UE may be equipped with a SIM (Subscriber Identity Module) or electronic-SIM comprising unique identities such as IMSI (International Mobile Subscriber Identity), TMSI (Temporary Mobile Subscriber Identity), or GUTI (Globally Unique Temporary UE Identity) associated with the user using the UE. The presence of a SIM within a UE customizes the UE uniquely with a subscription of the user.

For the sake of clarity, it is noted that there is a difference but also a tight connection between a user and a subscriber. A user gets access to a network by acquiring a subscription to the network and by that becomes a subscriber within the network. The network then recognizes the subscriber (e.g. by IMSI, TMSI or GUTI or the like) and uses the associated subscription to identify related subscriber data. A user is the actual user of the UE, and the user may also be the one owning the subscription, but the user and the owner of the subscription may also be different. E.g. the subscription owner may be the parent, and the actual user of the UE could be a child of that parent.

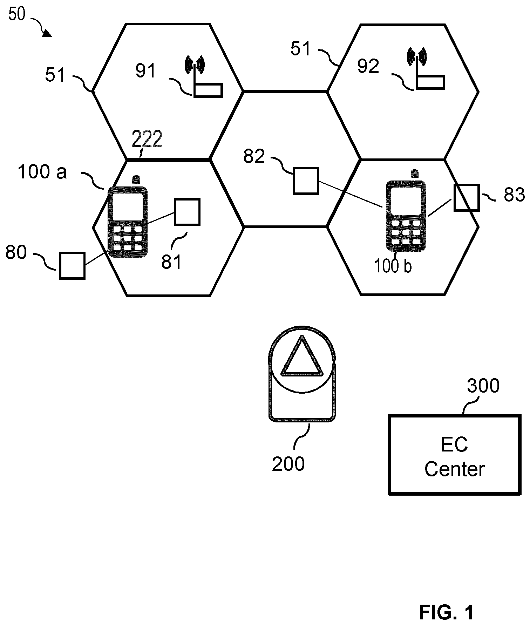

The solution discussed below proposes a method and a system which provides all the information from the Internet of senses that can be collected through a cellular network and preferably additionally with all the IOS data that the network is able to find in the environment where the emergency call is started. Figure 1 shows a schematic view of an architecture in which a mobile entity or UE 100a is connected to a cellular network 50 wherein the cellular network comprises different cells 51. Mobile entity 100a which is connected to sensors 80, 81 is making an emergency call. Additionally mobile entity 100b is provided which is also connected to the cellular network and which is connected to sensors 82, 83. Each of the sensors 80, 81 or 82, 83 are configured to provide sensor data in addition to any audio data available at the UE 100a, 100b. Furthermore, additional sensors 91 and 92 are provided which are not directly connected to one of the mobile entities100, but which can also provide sensor data to an emergency call center 300. When an emergency call is initiated at the UE 100a, the call may be handled in the core network of the cellular network by a call handling entity 200. The sensors 80 to 83 and 91,92 can be configured to collect other data than audio data and location data. The sensors can be IoS sensors which were trained using machine learning and which are configured to collect data identifying or describing a smell, an aroma, a gas or a flavor.

### Electronic Nose

The Electronic Nose (EN) is a tool that contains mainly three parts, a sample delivery system, an array of gas or chemical sensors, and a pattern recognition system. This technology can be used to detect simple or complex volatile organic compounds. Accordinlgy the electronic nose is configured to detect organic compounds.

The electronic nose concept is parallel to the human nasal system that works in coordination with the brain.

In similar lines to a human nose, the electronic nose works through a series of sensors. After detecting the aroma, the set of sensors generates a pattern based on the type of smell. Besides, the patterns obtained are trained to interpret and distinguish between various odors.

In the EN technology, Machine Learning (ML) is widely used due to its ability to process and comprehend large amounts of data, calibrate the gas sensor array, and provide accurate classification and recognition results. Among the broad range of ML algorithms, many of them are utilized in different parts of the EN technology. Pattern recognition algorithms are generally used for quantifying and classifying chemicals detected by an EN. Furthermore, classification algorithms are usually combined with data analysis techniques to recognize distinct aromas.

Optical EN, as a typical product of artificial olfactory technology, has been greatly developed in recent years and widely used in Internet of Things (IoT), such as food, industry, agriculture, medicine etc. For example, in environmental monitoring, it converts the detected gas into a certain signal, and carries out online monitoring, traceability analysis, and early warning of atmospheric odor; it is used to detect the deterioration of food and the freshness of fresh agricultural products in the detection of fresh agricultural products. The environment information captured by the optical e-nose is transmitted by wire/wireless networks to the intelligent application layer in IoT application. To obtain the comprehensive characteristics of gases objectively and accurately, the optical e-nose can roughly distinguish gases of different types and different concentrations without knowing the specific chemical composition.

### Electronic Tongue

The human sense of taste involves identifying basic flavors, including sweetness, acidity, bitterness, and salinity. The human sensory panel (trained or untrained) has been used to perform taste evaluations on many food products yet running and training people is relatively time consuming and expensive. In some cases, sensory panels can introduce bias if the panelists are not well trained; thus, many researchers have used the electronic tongue as a rapid and impartial detection alternative to the human tongue.

The electronic tongue is a multi-channel taste sensor (more than five basic flavors) with global selectivity. It is composed of several types of lipid/polymer membranes to transform information about taste substances into electrical signals uploaded into a computer. Electronic tongue signals are analyzed in a pattern recognition unit to discriminate between similar samples. It is an analytical tool composed of three parts: (1) nonspecific and not very selective chemical sensors that have partial specificity (cross-sensitivity) to different components in a liquid sample; (2) an appropriate method of pattern recognition; (3) multivariate calibration for data processing.

By decoding the chemical energy of the interaction between the detection unit and the analytes into a primary signal output, the array of detection elements determines the entire analytical systems.

### Electronic Eye

An electronic eye is a computer vision technology that converts optical images into digital images. It uses an image sensor instead of the human eye to collect images of objects and uses computer simulation criteria to identify the images to avoid subjective deviation of human vision. The computer vision process generally includes five steps: image acquisition, image processing, feature extraction, pattern recognition, and decision making. All steps are sequential and could be expressed as a simple flow chart. Decision-making rules are a part of the control system that includes a pre-established set of rules, formalizing the control and optimization strategy. Computer vision is part of the intelligent control system; it could also include supervised or unsupervised learning elements for pattern recognition, modeling, and knowledge base development. In this case, the set of rules could be adjusted, depending on the established interaction procedure and the optimization criteria.

The application proposes that the UEs should have features in the embedded software to recognize that a call is an EC and automatically collect all IoS data, providing useful information to the EC Operator to handle the emergency in the best way.

UEs have a predefined list of emergency numbers, in addition also the UICC (Universal Integrated Circuit Card) should contain an updated list of emergency numbers based on the nation where the device is located, so that the device can check predefined and UICC lists to discover if it is starting a normal call or an EC. The UE 100 should be able to select and collect the most appropriate IoS data to send to the EC center. The user can also pre-select in advance the IoS data to send. Accordingly video data generated by an electornic eye contain the image data and additionally already recognized patterns present in the image data.

If the calling UE 100a, for any reason, is not able to recognize an EC, the network can request or force the activation and collection of IoS data from the UE to be used in the EC handling.

If the calling UE 100a is not able to provide all IoS data due to malfunctions, low battery or bandwidth limitations, the network can integrate or replace the IoS data by taking them in the surrounding environment from other IoS sensors or other UE devices under the network control in the vicinity of the calling UE. The network will contact those UEs or sensors and request them the authorization to provide their data. In the example shown in Figure 1 this might be UE 100b, having additional sensors 82, 83.

The network may also add to the EC call all information from the registered IoS devices that are available in the surrounding area from which is started the EC call, this can be done on network decision such as a call handling entity, or on demand of the EC center.

EC center 300 can decide to force the sensor activation or to reject a call with no SIM/UICC connected and no sensors activated.

EC Center 300 can also indicate to the UE 100a,b and the Network the IoS data that are more interesting for the analysis of the emergency call.

When the EC is started with sensors activated, it is requested to the network to transport all information from UE 100a,b to EC center 300. The network will transport the EC IoS data as for normal IoS calls, a special handling could be needed for sensors data not yet handled in normal calls and for the data added directly by network.

As will be explained below in addition to a voice call, the mobile entity may transmit additional pieces of information such as the following:
- the exact position of the mobile entity,
- the environment where the emergency occurs,
- the temperature of the environment,
- a presence of toxic gas or smoke,
- the presence of explosive,
- the presence of any hazard in the environment,
- the color status such as whether the caller is normal, sick, a junkie, or drunk,
- the caller mood, meaning whether the caller is afraid or lying,
- the presence of other people in the environment,
- a status of the victims if any,
- a possible kind of food contamination.

The operator of the center 300 can in that way immediately have all the needed information to verify if the emergency call is a false or a real emergency call and, in case of a real emergency call can based on provided sensor data what to do next. By way of example the operator can determine what types of services to send to the site, ambulances with adequate equipment and/or firefighters and/or police and/or other help. Furthermore the operator can determine what actions to suggest to the people present in the environment of the emergency while waiting for the rescue team.

The proposed solution can be implemented in any existing cellular network. All the required information from existing sensors should be collected and sent during the emergency call. By way of example positioning and health data can be directly collected from wearable sensors or from apps handling these sensors via the calling UE and may be sent to the operator during the emergency call. In case the sensor(s) is not activated, the UE will activate it/them upon detection that an emergency call is ongoing.

The proposed solution can also be used in normal 6G IOS calls when these calls are performed automatically by specific devices with the purpose to alert a person, not a public authority, about an event connected with an emergency. Accordingly an emergency call could also be defined as a private emergency call, by way of example house alarms, sport devices like cycling computers, baby care devices may be devices which can be enabled with the technology discussed above or discussed in further detail below.

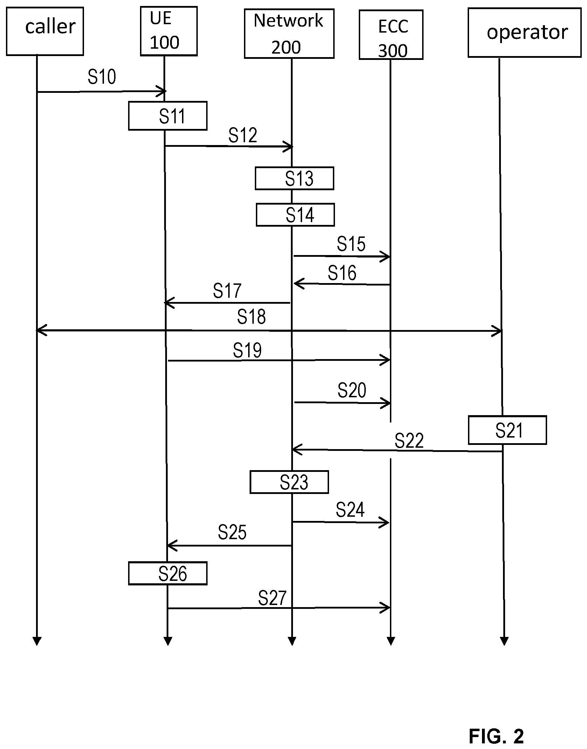

Figure 2 shows a schematic message exchange between the involved entities in a network as shown in Figure 1.

A caller decides to start an EC (S10), the UE 100 recognizes that the new call is an EC (for instance in Europe it is a 112 call) and activate all sensors (S11).

UE 100 starts the EC indicating that sensor data will be provided (in step S12), the network, e.g. an emergency call handling entity 200, verifies that the received request is an EC, and that the sensor data will be provided (S13). The call handling entity, the Network, can also check if there are registered IoS sensors or UEs close to the caller UE (S14) such as UE 100b of Fig. 1 and sends the alert to EC Center (S15). In Case the sensor data has been not selected by UE 100, Network or call handling entity 200 can request to UE 100 to activate sensor data.

When Network receives a positive answer from EC Center (S16) it generates the connection to UE (S17) and the speech among calling party and operator, via UE and EC Center, starts (S18).

At the same time, UE starts to send sensor data to EC Center (S19), and the call handling entity or Network starts to send the data from registered IoS sensors and other UEs (S20), and the EC Operator can handle received data (S21) in the best way.

In case EC Operator/EC Center needs specific Data, the latter can request them (S22), Network or call handling entity 200 will search the data from registered sensors close to the caller (S23) and if found provides them to EC Center (S24). The sensors close to the caller can be provided at the calling UE or at a UE close to the caller.

Network/the call handling entity will also forward the data request to UE (S25) that will order its sensors to generate the data (S26) and provide the requested data to the EC Center (S27).

In the following some Use cases (UC) are discussed in more detail.

### - a possible false EC

This UC is applicable any time an EC is received from a person (for example a child or a raving person) that is not able to describe exactly which is the emergency or that is not trustable, it is also applicable to all false EC cases reported in table above

With the data received from device sensors, the EC Operator can verify the status and the mood of the caller, and the environment problems, if any.

Operator can verify if the declared emergency is compatible with sensors' data and if so, accept the EC and start the correct procedure to fix the emergency.

In case of silent call the EC Operator can distinguish if the call is a false EC (maybe due to pocket call or child playing) or is a real EC and it is silent because the caller due to the emergency cannot speech, for example the caller has lost consciousness or ran away or is being threatened by someone.

### - EC due to a fire

In case of EC due to a fire, the EC Operator with sensor data from UE 100 and Network can verify the following parameters:
- Temperature
- Presence of Toxic gas
- Visibility in the environment
- Possible escape routes
- Presence of injured
- Presence of any hazard (explosive, fuel, etc.)
- Exact Position of the caller
- Any other data provided by sensors'

With this information, EC Operator can request the right external support (firefighters, ambulances, hospitals, etc.) and give the best indication to the rescuers and to the victims.

### - EC due to poisoning

In case of an EC due to poisoning, the sensor data, mainly e-nose, e-tongue, and e-eye, can help the EC Operator to understand the poisonous substance ingested.

The Operator can indicate the first operation to do while waiting for the rescues and indicate to the rescuers which is the cause so that they can save time when arrive in presence of the poisoned.

### - EC automatically generated by a device

Already now many loT sensors can generate alarms and EC, the sensors can check the environment like a fire detection system or car crash or check the health of a person (for example a heart attack), these sensors are normally used by sick people or by sporting people.

With the solution discussed here in case an emergency is detected by the sensors when they automatically generate an EC (or a private EC) and all pieces of information about the emergency will be provided, not only a preregistered message describing the problem. EC operator can evaluate if any intervention is needed and can act in the right way.

EC Center 300 could also adopt a module to automatically pre handle the ECs where the caller is not a human (the ones generated directly by devices connected to sensors), this module, that can use AI/ML, can analyze the sensors data received and decide the best actions to do. in case of automatic false emergency calls, the false calls due to a not functioning well device or due to a misuse by the user can be detected with a high likelihood.

The EC Center 300 could also include an AI/ML module to analyze the IoS information received to better correlate the received data.

A possible use of AI/ML is to identify the people involved in the EC and to guess their mood, with only smell or also with voice and if available images, it could be possible to understand if a person is lying or is afraid or is sick.

An AI/ML module can also be included in the UE 100 to decide, when not all sensors of the IoS can be activated or not all data can be sent, which are the most important data to provide according to the EC. The module can understand by itself the reason of the calls with the analysis of the IoS data (Heart attack, fire, or other) or analyzing the EC content speech.

In the following change to the interfaces of the involved entities will be discussed.

For the interface changes, during call set up the network 50 can send the UE 100 a request to activate the sensors. Furthermore, the network 50 can receive from the emergency call center 300 the request for sensor data and the network, the call handling entity may forward this request to the UE 100.

During an ongoing call the network, the call handling entity, should provide the complete sensor data to the emergency call center 300 and especially the data that were directly added in the network and through the initiation of the network.

As far as the UE 100 is concerned the UE should be able to verify if a new call that is initiated is an emergency call. If this is the case the UE 100 should automatically activate all sensors that are available to the UE. The setup request of the emergency call may contain information about the activated sensors. Furthermore it is possible that the UE 100 is configured to send sensor data also to a private number, as this might be useful for automatically generated calls generated by certain devices to alert a certain party about an emergency event.

The UE 100 can furthermore receive from the network the request to activate specific sensors if not yet done and the UE should be able to accept this request and should be able to activate the sensors as requested.

When the UE 100 is connected to the emergency call center 300, the UE 100 should provide all sensor data to the emergency call center 300 via the network 50.

It is possible, that the UE 100 has limited power or a low bandwidth available or some sensor applications may not work properly. Accordingly it is possible that not all the possible IoS data can be collected and sent to the emergency call center 300. The UE, possibly with an Al or machine learning module can be able to recognize the most important data to be sent and the UE will only collect the most important data. But if for example the UE can check whether the collected sensor data was in a predefined normal range, the data are only sent if they are outside the normal or predefined range.

The UE 100 could also recognize the speech of the emergency call and can send the data related to the conversation. Furthermore, the emergency call center can request to send specific IoS data to the UE. By way of example the Center 300 can request to focus the electronic nose on the search of a specific gas.

As far as the network 50 is concerned, especially the call handling entity 200 should verify that the request from the UE 100 to send sensor data is detected and correctly interpreted. If the sensor data are not included in the emergency call set up, the call handling entity or network can send a request to the UE 100 for sensor activation.

The network might also verify if there is any registered sensor close to the calling UE 100 under the control of the network 50 so that in this case the network or call handling entity will initiate a contact to those sensors and request them to provide their data, such as the sensors 82, 83 or 91, and 92 of Fig. 1. The call handling entity 200 can also verify if there is any UE close to the caller under the network's control so that in this case the network should contact those UE's and request the authorization to provide their data.

For an ongoing emergency call the network should be able to provide a way to send all the required sensor data. Furthermore, the data collected from other available sensors in the neighbourhood should be provided to the emergency call center 300.

During an ongoing emergency call, when the emergency call centers 300 does not receive sensor data, it can request the activation and sending of the sensor data. At the reception of this request from the emergency call center 300, the call handling entity 200 should forward this request to the UE 100. If there are other sensors registered in the network that can provide useful data, the network can start to send the data from those external sensors to the emergency call center if not yet done.

The emergency call center can request to have a specific type of sensor information. In this case the network should search if it is possible to provide the desired information from other registered sensors. Furthermore, the network or call handling entity should forward the request to the calling UE 100.

As far as the emergency call center 300 is concerned, the call center 300 can be able to verify the presence of sensor data in the emergency call. If no sensor data is present in the emergency call and additional information is needed the emergency call center 300 can request them from the network. The call centers 300 should be configured to receive and handle all the different types of sensor data provided by the UE 100 and the network 50/call control entity 200.

The emergency call center can also request to be provided with the specific type of sensor information. In this case it can send a request to the network that will forward the request also to the UE 100 or search for the requested information in the network.

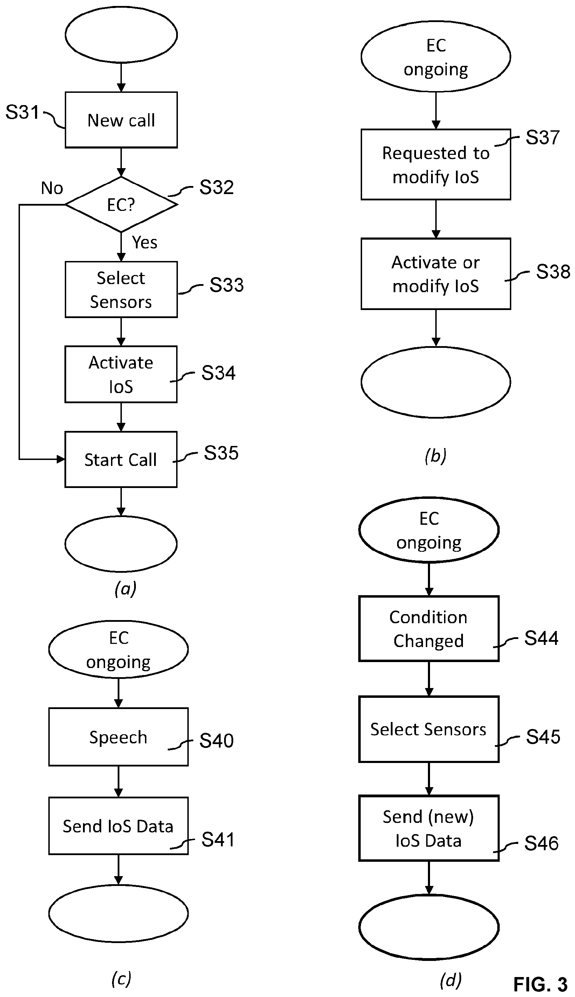

Now referring to Figure 3, Figure 3a summarizes some of the actions performed by the UE 100 in an emergency call. When a new call is started in step S31 the UE can check in step S32 whether the call is an emergency call or not. If the new call is an emergency call, the UE, preferably an artificial intelligence or machine learning module in the UE will select the sensors to be activated by checking the UE power and the transmission bandwidth available (S33) and by determining which sensor data can be more useful. The user of the UE may also preselect in advance which IoS sensors should ber used. If not all the sensor data are activated, it can select the sensor data that are out of a normal range or the sensor data that has been requested in other emergency calls in the past or any other criteria suggested by the Al algorithm. When the sensor data can be parametrized, also this setting can be done by the corresponding module, the sensor selecting module. The sensor selecting module in the UE can include the Al or machine learning module. By way of example the module can set the electronic nose filter for filtering a specific gas. If possible and if there are no bandwidths or power problems, all sensors should be activated as shown in step S34 and in step S35 the emergency call is started. The UE will start the call and indicate that sensor data will be exchanged.

In Figure 3b the situation is shown where the network or the emergency call center recognizes that the call requested by the UE is an emergency call and the sensor data are not activated. Accordingly, in case of an ongoing call the UE can receive the request to modify or activate certain sensor data (S37). This request might be initiated by the emergency call center or by the network. The UE will then activate or modify the sensors as requested in step S38.

In Figure 3c, the situation of an ongoing emergency call is shown that the UE should not call the handle the speech components in step S40, but also the sensor data which should be transmitted to the emergency call center in step S41.

In Figure 3d the situation is shown where an ongoing emergency call exists and the UE detects that there is a change in the call condition in step S44. This change can be due to a low power, a bandwidth or can occur as the UE and the corresponding module to select the sensors is now able to more clearly understand the reason for the emergency call so that the UE initiates the change of the activated sensors. To this end in step S45 other sensors are selected that should be activated and transmit sensor data and in step S46 the new sensor data are then sent to the emergency call center 300.

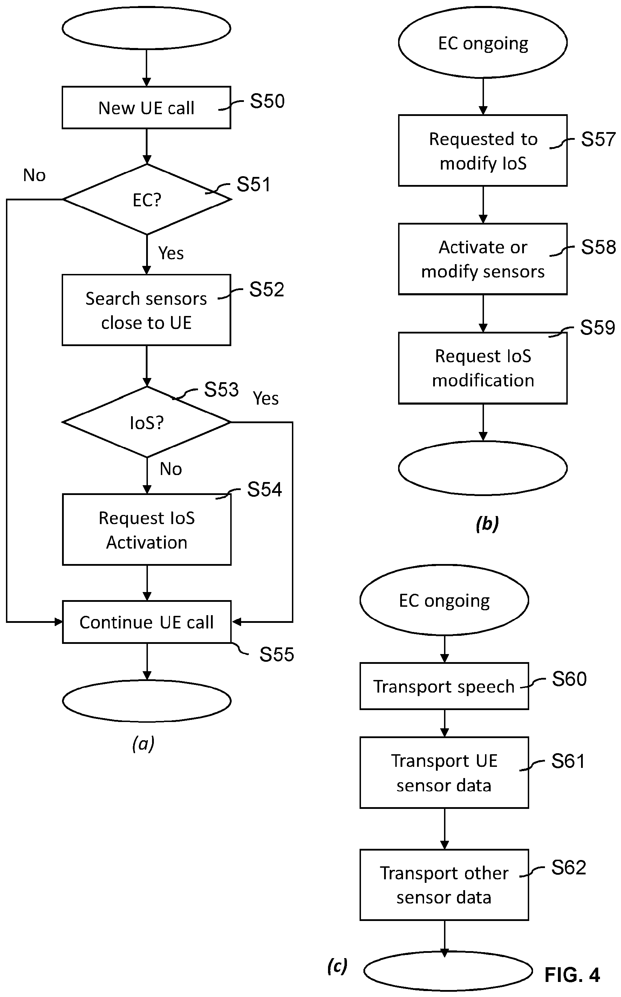

Figure 4 shows in more detail some of the steps carried out in the cellular network, by the example in the call handling entity 200 which handles the emergency call with the sensor data. In Figure 4a, a new UE call is detected in step S50 and the network or call handling entity will check whether the call is an emergency call in step S51. If it is detected as an emergency call the network will search for sensors close to the UE making the emergency call in step S52. In step S53 it is also checked whether the UE requested to already send sensor data. If this is not the case, in step S54 the network can send a request to activate certain sensor data. The call then continues in step S55.

In Figure 4b an ongoing emergency call is present and if the emergency call center 300 verifies that sensor data are not sent or that a different type of sensor setting is needed, the emergency call center requests the network or call handling entity to force the sensor data activation as shown by step S57. The network performs what is requested by the call center in S58 such as the activation of other sensors registered in the network and may be, if not yet done change the setting of the interested registered sensors. In step S59, the request is forwarded to the UE 100 to modify, activate or change the sensor settings.

Figure 4C discloses the situation that the call handling entity should not only transport the speech data in step S60, but it should also transport all the needed sensor data from the UE to the emergency call center. The additional sensor data from the UE are transmitted in step S61. Additionally in step S62 other sensor data, data generated or requested from the network are also to be transmitted to the emergency call center.

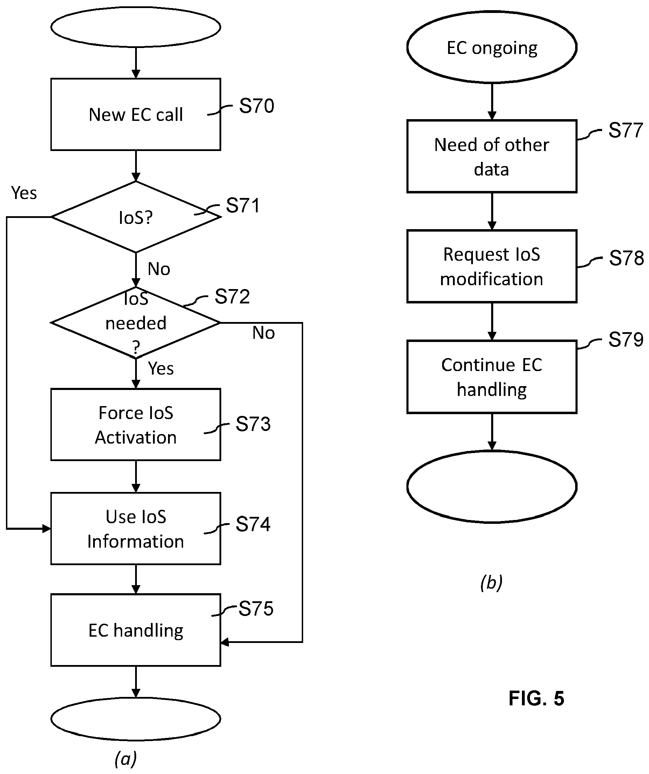

Figure 5a and b summarize the situation at the emergency call center 300. When a new emergency call is detected in step S70 it is checked whether sensor data are provided in step S71. Furthermore it is checked in step S72 whether additional sensor data is needed. If this is the case the network should be requested to send the sensor data in step S73. In step S74 the emergency call center then uses the provided sensor data and determines the corresponding emergency call handling in step S75.

In Figure 5b an emergency call is ongoing and it is determined in step S77 that other sensor data are needed or that the setting of the currently used sensors should be amended. Accordingly in step S78 the modification of the sensor data is requested and in step S79 the emergency call handling is continued. By way of the example if the operator of the emergency call center is informed that the cause of the call is food poisoning, it can be requested that the electronic nose checks the smell of poisonous substances in the environment.

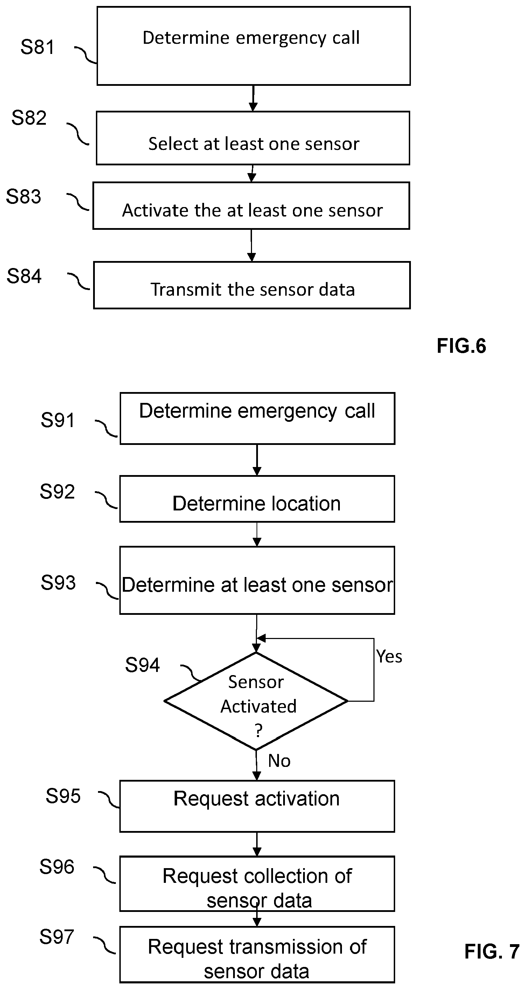

Figure 6 summarizes some of the steps carried out the mobile entity in the situations discussed above. In step S81 the mobile entity determines that an emergency call has been started or is ongoing. In step S82 the mobile entity selects at least one sensor connected to the mobile entity wherein this sensor is configured to collect data other than audio data from an environment in which the mobile entity is located. In step S83 the at least one sensor is activated and the collection of the sensor data is requested. In step S84 the mobile entity transmits the requested sensor data to the emergency call center.

Figure 7 summarizes some of the steps carried out by the network, here for call handling entity 200 which handles the emergency call of the mobile entity. In step S91 the call handling entity determines that the call from the UE 100 is an emergency call. In step S92 the location of the UE is determined and in step S93 at least one sensor is determined which is located in an environment of the mobile entity. Referring to Figure 1 this can mean that it is determined to activate sensors 91 or 92 or 82, 83 located in the neighborhood of the UE 100 making the emergency call. This can also mean to select sensors 80 or 81 directly connected to the UE which were not yet activated. In step S94 it is checked whether the determined sensors are activated or not. If this is not the case, the activation of the determined sensor is requested in step S95 and the collection of sensor data is requested and the transmission of the sensor data to the emergency call center as shown in step S96 and S97.

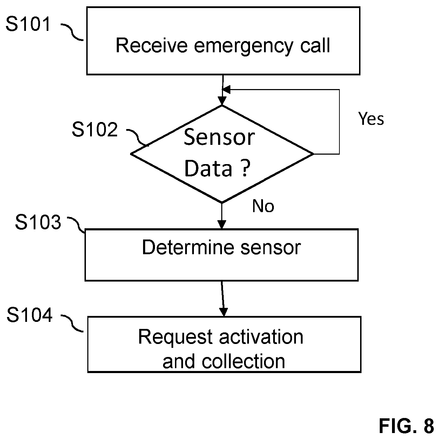

As far as the emergency call center 300 is concerned, the center 300, as shown in Fig. 8 receives an emergency call in step S101 and determines in step S102 whether sensor data of at least one sensor is received in addition to the emergency call. If this is not the case, the emergency call center can determine which of the sensors should be activated to collect the sensor data in the neighborhood of the UE 100 in step S103 and in step S104 the activation and collection of sensor data is requested.

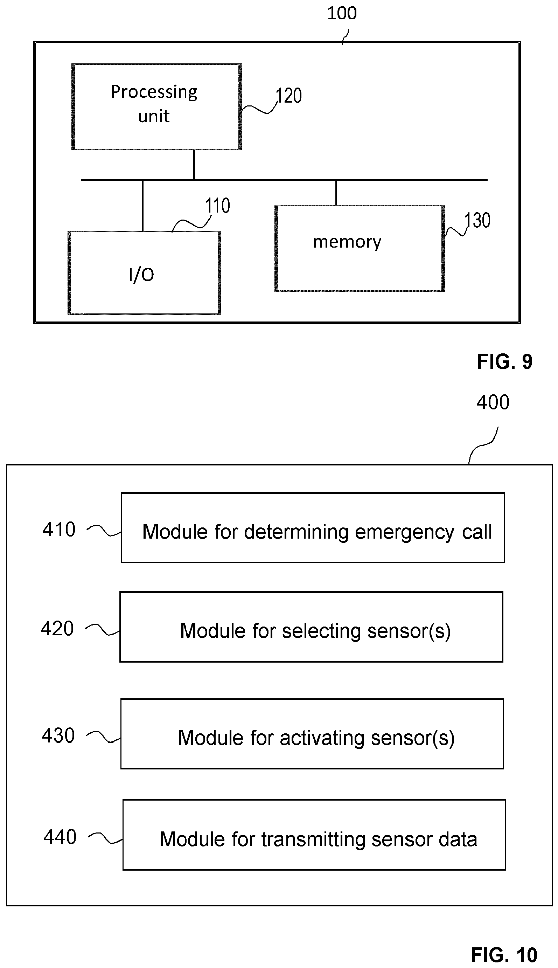

Figure 9 shows a schematic architectural view of the mobile entity 100 which can operate as discussed above during the emergency call handling. The UE 100 comprises an interface configured to transmit user data, e.g. voice data, sensor data or control messages data to other entities via the cellular network, the interface 110 being configured to receive voice data and control messages needed for the audio data. Interface 110 is further configured to transmit the additional sensor data as mentioned above in addition to the voice call. The UE furthermore comprises a processing unit 120 which is responsible for the operation of the UE 100. The processing unit 120 can comprise one or more processors and can carry out instructions stored on a memory 130, wherein the memory may include a read-only memory, a random access memory, a mass storage, a hard disk or the like. The memory can furthermore include suitable program code to be executed by the processing unit 120 so as to implement the above described functionalities in which the UE is involved.

Figure 10 shows a further architectural view of a mobile entity 400 comprising a first module 410 configured to determine whether an emergency call is ongoing. A second module 420 is configured to select the sensor which should send additional data to the emergency call center. A module 430 can be provided configured to activate the selected sensors and module 440 can be provided configured to transmit the sensor data to the emergency call center.

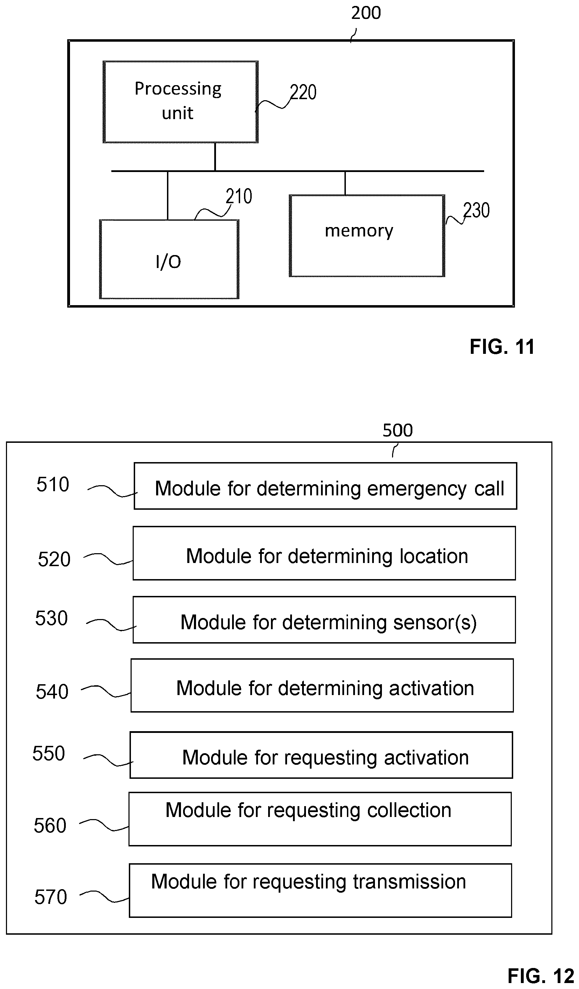

Figure 11 shows a schematic architectural view of a call handling entity 200 configured to handle the emergency call within the cellular network. The call handling entity 200 comprises an interface 210 configured to transmit or receive voice call data and configured to transmit and receive additional sensor data, the interface being further configured to transmit and receive control messages needed for the controlling of the emergency call. The call handling entity furthermore comprises a processing unit 220 which is responsible for the operation of the call handling entity 200. The processing unit 220 comprises one or more processors and can carry out insturctions stored on a memory 230, wherein the memory may include a read-only memory, a random access memory, a mass storage, a hard disk or the like. The memory can furthermore include suitable program code to be executed by the processing unit 220 so as to implement the above-described functionalities in which the call handling entity is involved.

Figure 12 shows another schematic architectural view of the call handling entity 500. The call handling entity comprises a first module 510 configured to determine that an emergency call is going on. A module 520 is provided configured to determine a location of the UE making the emergency call. A module 530 is provided configured to determine at least one sensor located in the neighborhood of the mobile entity. A module 540 is configured to determine whether the at least one sensor is activated to collect the sensor data from the environment. If the sensor is not activated, module 550 requests the activation of the at least one determined sensor, module 560 is configured to request the collection of the sensor data and module 570 is configured to request the transmission of the sensor data to the emergency call center.

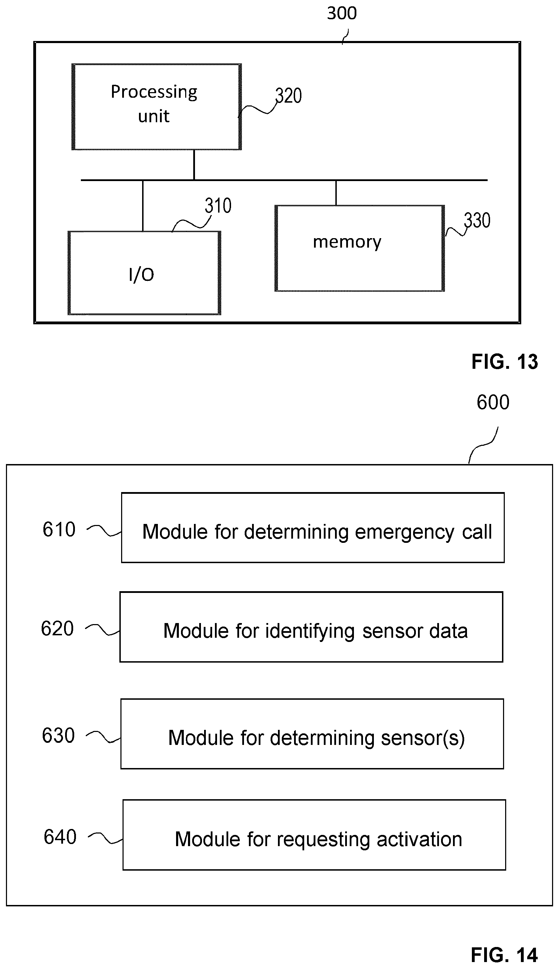

Figure 13 shows a schematic architectural view of the emergency call center 300 configured to handle the emergency call. The call center 300 comprises an interface 310 configured to receive the emergency call data and the sensor data and configured to transmit voice call data or requests to the other entities such as the UE 100 or the call handling entity 200. The emergency call center furthermore comprises a processing unit 320 which is responsible for the operation of the call center 300. The processing unit 320 comprises one or more processors and can carry out instructions stored on a memory 330, wherein the memory may include a read-only memory, a random access memory, a mass storage, a hard disk or the like. The memory can include suitable program code to be executed by the processing unit 320 so as to implement the above-described functionalities in which the emergency call center is involved.

Figure 14 shows a further schematic architectural view of the emergency call center 600 configured to handle the emergency call. Emergency call center 600 comprises a first module 610 configured to determine that an emergency call is ongoing.

Emergency call center 600 comprises a second module 620 configured to determine whether sensor data is received in addition to the emergency call. If this is not the case, module 630 is configured to determine at least one sensor which should be activated and collect sensor data and module 640 is configured to request the activation of the sensor and the collection of the sensor data. Finally, module 640 can also be configured to request the transmission of the sensor data to the emergency call center.

From the above said some general conclusions can be drawn:
As far as the mobile entity 100 is concerned, when at least one sensor is selected by the mobile entity 100 it is possible that the mobile entity selects all sensors to which the mobile entity is connected and the sensors are requested to collect the corresponding sensor data, the activation of the at least one sensor then comprises the activation of all sensors to which the mobile entity is connected.

Furthermore it is possible that for the selection of the at least one sensor the mobile entity 100 determines an available power at the mobile entity and/or a transmission bandwidth available at the mobile entity. The at least one sensor may then be selected based on the available power and/or the transmission bandwidth.

Furthermore, for the selection of the sensor it might be determined which of the at least one sensor was activated in former emergency calls, and the at least one sensor is selected based on the activated at least one sensor which was activated in former emergency calls.

The selecting of the at least one sensor may be carried out by a machine-learning module provided at the mobile entity
Furthermore, the mobile entity may determine a change in a call condition under which the emergency call is carried out. The selecting of the at least one sensor is then adapted taken into account the change in the call condition. The change in the call condition can include the detection of a defined state of the available power, can include a predefined change in a transmission bandwidth available at the mobile entity or can include an assessment of an emergency of the call.

Furthermore, when it has been determined that the emergency call has been started, an indication may be transmitted to the cellular network which indicates that sensor data will be transmitted in addition to audio data present in the call.

As far as the call handling entity 200 is concerned, the call handling entity may determine if the call is an emergency call and this can include the step of determining whether the mobile entity has transmitted an indication that sensor data may be transmitted in addition to the audio data present in the call. If this indication is not detected, the mobile entity is requested to send sensor data in addition to the audio data.

The requested sensor data may include other data than audio data. The at least one sensor selected by the court handling entity may also be not connected to the mobile entity but maybe separately provided in the cellular network.

The sensor data can include data from an electronic nose, an electronic tongue or an electronic eye.

The call handling entity may furthermore receive an indication from the emergency call center to which the emergency call is directed, which type of sensor data should be collected for the emergency call. The call handling entity then determines at least one further sensor in the environment of the sensor type identified in the indication and the call handling entity can request the collection of sensor data of this at least one further sensor.

Furthermore it is possible to determine at least one operating parameter of the at least one sensor for which the collection of sensor data has already been collected. If this operating parameter should be adapted, the at least one sensor is requested to adapt the at least one operating parameter as determined. The operating parameter can include, in case of an electronic tongue, which smell should be collected, for an electronic nose, which gas should be identified and for an electronoic eye, which pattern should be recognized.

As far as the emergency call center is concerned, the emergency call center may additionally determine at least one reaction to be initiated in response to the received emergency call taken into account the sensor data.

The emergency call center may estimate an emergency situation for which the emergency call has been received. Furthermore, at least one further sensor is determined which should be activated based on the estimated emergency situation and the emergency call center can request activation of the at least one further sensor and the collection of sensor data by the at least one further sensor.

Furthermore, the emergency call center may determine at least one operating parameter of the at least one sensor for which the collection of sensor data has already been started. The call center 300 can determine how the at least one operating parameter should be adapted based on the estimation of an emergency situation for which the emergency call has been received. Furthermore, the adaptation of the at least one operating parameter is requested at the at least one sensor.

The solution discussed above can be used in a virtual network function environment or a native cloud architecture of a network such as 6G, 5G or 4G network to provide all the new IOS data available from the UE and the network to the emergency call center. Existing emergency call mechanisms can be improved to handle additional sensor data so that new options to quickly react to emergency events will be provided. In general the time of intervention will be reduced so that lives can be saved in high-priority emergency cases.

## Claims

1. A method carried out at a call handling entity (200) configured to handle an emergency call of a mobile entity (100) in a cellular network (50):
- determining (S51, S91) that a call from the mobile entity (100) is an emergency call,
- determining (S92) a location of the mobile entity (100),
- determining (S53, S93) at least one sensor (80-83, 91, 92) located in an environment of the mobile entity (100) close to the mobile entity but not connected to the mobile entity (100),
- determining (S94) whether the at least one sensor is activated to collect sensor data from an environment in which at least one sensor is located, wherein when the at least one sensor is not activated,
- requesting (S54, S95) an activation of the at least one sensor,
- requesting (S96) the collection of sensor data at the at least one sensor, and
- requesting (S97) a transmission of the collected sensor data to an emergency call center handling the emergency call.

2. The method of claim 1, wherein if it is determined that a call from the mobile entity (100) is an emergency call, determining whether the mobile entity has transmitted an indication that the sensor data will be transmitted in addition to audio data present in the call, wherein if the indication is not detected, requesting the mobile entity to send sensor data in addition to the audio data.

3. The method of any of claims 1 to 2, further comprising:
- receiving (S57) an indication from an emergency call center (300) to which the emergency call is directed, which type of sensor data should be collected for the emergency call,
- determining at least one further sensor in the environment of the sensor type identified in the indication,
- requesting (S59) the collection of sensor data at the at least one further sensor.

4. The method of any of claims 1 to 3, further comprising:
- determining at least one operating parameter of the at least one sensor for which the collection of sensor data has already been requested, wherein the at least one operating parameter should be adapted,
- requesting the at least one sensor for which the collection of sensor data has already been requested, to adapt the at least one operating parameter as determined.

5. A method carried out at an emergency call center (300) receiving emergency calls via a cellular network (50), the method comprising:
- receiving (S70, S101) an emergency call from a mobile entity (100),
- determining (S72, S102) whether sensor data of at least one sensor (80-83, 91, 92) configured to collect sensor data from an environment in which the mobile entity is located, is received, in addition to the emergency call,
comprising
- determining (S103) that a specific type of sensor should be activated to collect the sensor data,
- requesting (S104) an activation of a sensor of the specific type and a collection of the sensor data, wherein the sensor of the specific type is close to the mobile entity but not connected to the mobile entity.

6. The method of claim 5, further determining at least one reaction to be initiated in response to the received emergency call taking into account the sensor data.

7. The method of claim 5 or 6, further comprising:
- estimating an emergency situation for which the emergency call has been received,
- determining (S77) at least one further sensor to be activated based on the estimated emergency situation,
- requesting (S78) an activation the at least one further sensor and a collection of sensor data by the at least one further sensor.

8. The method of any of claims 5 to 7, further comprising:
- determining at least one operating parameter of the at least one sensor for which the collection of sensor data has already been requested,
- determining how the at least one operating parameter should be adapted, based on an estimation of an emergency situation for which the emergency call has been received,
- requesting the adaptation of the at least one operating parameter as determined.

9. The method of any preceding claim, wherein the sensor data comprise at least one of the following:
- data generated by an electronic nose,
- data generated by an electronic tongue,
- data generated by an electronic eye.

10. The method of any preceding claim, wherein the sensor data comprise data generated by an electronic sensor identifying at least one of an aroma, a smell, a gas, a flavor.

11. The method of claim 9 or 10, wherein the sensor data were generated using an electronic sensor which was trained using machine learning.

12. A call handling entity (200) configured to handle an emergency call of a mobile entity (100) in a cellular network (50), the call handling entity comprising a memory and at least one processing unit, the memory comprising instructions executable by the at least one processing unit, wherein the call handling entity is operative to:
- determine that a call from the mobile entity (100) is an emergency call,
- determine a location of the mobile entity (100),
- determine at least one sensor (80-83, 91, 92) located in an environment of the mobile entity (100) ) close to the mobile entity but no connected to the mobile entity (100),
- determine whether the at least one sensor is activated to collect sensor data from an environment in which at least one sensor is located, wherein when the at least one sensor is not activated,
- to request an activation of the at least one sensor
- to request the collection of sensor data at the at least one sensor,
- to request a transmission of the collected sensor data to an emergency call center handling the emergency call.

13. The call handling entity of claim 12, further being operative to perform the method of any of claims 2 to 4 or 9 to 11 when depending, directly or indirectly, on any of claims 1 to 4.

14. An emergency call center (300) configured to receive emergency calls via a cellular network (50), the emergency call center comprising a memory and at least one processing unit, the memory comprising instructions executable by the at least one processing unit, wherein the emergency call center is operative to:
- receive an emergency call from a mobile entity (100),
- determine whether sensor data of at least one sensor (80- 83, 91, 92) configured to collect sensor data from an environment in which the mobile entity is located, is received, in addition to the emergency call,
comprising
- to determine that a specific type of sensor should be activated to collect the sensor data,
- to request an activation of a sensor of a specific type and a collection of the sensor data, wherein the sensor of the specific type is close to the mobile entity but not connected to the mobile entity..

15. The emergency call center of claim 14, further being operative to perform the method of any of claims 6 to 11 when depending, directly or indirectly, on claim 5.

16. A system comprising a call handling entity as mentioned in any of claims 12 or 13, and an emergency call center as mentioned in any of claims 14 to 15.

## Patentansprüche

1. Verfahren, das an einer Anrufbearbeitungseinheit (200) ausgeführt wird, die dazu konfiguriert ist, einen Notruf einer mobilen Einheit (100) in einem Mobilfunknetz (50) zu bearbeiten:
- Bestimmen (S51, S91), dass es sich bei einem Anruf von der mobilen Einheit (100) um einen Notruf handelt,
- Bestimmen (S92) eines Standorts der mobilen Einheit (100),
- Bestimmen (S53, S93) mindestens eines Sensors (80-83, 91, 92), der sich in einer Umgebung der mobilen Einheit (100) nahe an der mobilen Einheit, aber nicht angeschlossen an die mobile Einheit (100), befindet,
- Bestimmen (S94), ob der mindestens eine Sensor aktiviert ist, um Sensordaten aus einer Umgebung zu erfassen, in der sich mindestens ein Sensor befindet, wobei, wenn der mindestens eine Sensor nicht aktiviert ist, Folgendes erfolgt:
- Anfordern (S54, S95) einer Aktivierung des mindestens einen Sensors,
- Anfordern (S96) der Erfassung von Sensordaten an dem mindestens einen Sensor und
- Anfordern (S97) einer Übertragung der erfassten Sensordaten an eine Notrufzentrale, die den Notruf bearbeitet.

2. Verfahren nach Anspruch 1, wobei, wenn bestimmt wird, dass es sich bei einem Anruf von der mobilen Einheit (100) um einen Notruf handelt, bestimmt wird, ob die mobile Einheit einen Hinweis übertragen hat, dass die Sensordaten zusätzlich zu Audiodaten, die in dem Anruf vorhanden sind, übertragen werden, wobei, wenn der Hinweis nicht erkannt wird, die mobile Einheit aufgefordert wird, Sensordaten zusätzlich zu den Audiodaten zu senden.

3. Verfahren nach einem der Ansprüche 1 bis 2, ferner umfassend:
- Empfangen (S57), von einer Notrufzentrale (300), an die der Notruf gerichtet ist, eines Hinweises darauf, welche Art von Sensordaten für den Notruf zu erfassen ist,
- Bestimmen mindestens eines weiteren Sensors in der Umgebung der Sensorart, die in dem Hinweis angegeben ist,
- Anfordern (S59) der Erfassung von Sensordaten an dem mindestens einen weiteren Sensor.

4. Verfahren nach einem der Ansprüche 1 bis 3, ferner umfassend:
- Bestimmen mindestens eines Betriebsparameters des mindestens einen Sensors, für den die Erfassung von Sensordaten bereits angefordert wurde, wobei der mindestens eine Betriebsparameter anzupassen ist,
- Anfordern des mindestens einen Sensors, für den die Erfassung von Sensordaten bereits angefordert wurde, den mindestens einen Betriebsparameter wie bestimmt anzupassen.

5. Verfahren, das an einer Notrufzentrale (300) ausgeführt wird, die Notrufe über ein Mobilfunknetz (50) empfängt, wobei das Verfahren Folgendes umfasst:
- Empfangen (S70, S101) eines Notrufs von einer mobilen Einheit (100),
- Bestimmen (S72, S102), ob Sensordaten von mindestens einem Sensor (80-83, 91, 92), der dazu konfiguriert ist, Sensordaten aus einer Umgebung zu erfassen, in der sich die mobile Einheit befindet, zusätzlich zu dem Notruf empfangen werden, was Folgendes umfasst:
- Bestimmen (S103), dass eine spezifische Art von Sensor zu aktivieren ist, um die Sensordaten zu erfassen,
- Anfordern (S104) einer Aktivierung eines Sensors der spezifischen Art und einer Erfassung der Sensordaten, wobei der Sensor der spezifischen Art nahe an der mobilen Einheit ist, aber nicht an die mobile Einheit angeschlossen ist.

6. Verfahren nach Anspruch 5, das ferner mindestens eine Reaktion bestimmt, die als Antwort auf den empfangenen Notruf unter Berücksichtigung der Sensordaten einzuleiten ist.

7. Verfahren nach Anspruch 5 oder 6, ferner umfassend:
- Einschätzen einer Notfallsituation, für die der Notruf empfangen wurde,
- Bestimmen (S77) mindestens eines weiteren Sensors, der basierend auf der eingeschätzten Notfallsituation zu aktivieren ist,
- Anfordern (S78) einer Aktivierung des mindestens einen weiteren Sensors und einer Erfassung von Sensordaten durch den mindestens einen weiteren Sensor.

8. Verfahren nach einem der Ansprüche 5 bis 7, ferner umfassend:
- Bestimmen mindestens eines Betriebsparameters des mindestens einen Sensors, für den die Erfassung von Sensordaten bereits angefordert wurde,
- Bestimmen, wie der mindestens eine Betriebsparameter anzupassen ist, basierend auf einer Einschätzung einer Notfallsituation, für die der Notruf empfangen wurde,
- Anfordern der Anpassung des mindestens einen Betriebsparameters wie bestimmt.

9. Verfahren nach einem der vorhergehenden Ansprüche, wobei die Sensordaten mindestens eines der Folgenden umfassen:
- Daten, die durch eine elektronische Nase erzeugt wurden,
- Daten, die durch eine elektronische Zunge erzeugt wurden,
- Daten, die durch ein elektronisches Auge erzeugt wurden.

10. Verfahren nach einem der vorhergehenden Ansprüche, wobei die Sensordaten Daten umfassen, die durch einen elektronischen Sensor erzeugt wurden, der mindestens eines aus einem Aroma, einem Geruch, einem Gas, einem Geschmack identifiziert.

11. Verfahren nach Anspruch 9 oder 10, wobei die Sensordaten unter Verwendung eines elektronischen Sensors erzeugt wurden, der unter Verwendung von maschinellem Lernen trainiert wurde.

12. Anrufbearbeitungseinheit (200), die dazu konfiguriert ist, einen Notruf einer mobilen Einheit (100) in einem Mobilfunknetz (50) zu bearbeiten, wobei die Anrufbearbeitungseinheit einen Speicher und mindestens eine Verarbeitungseinheit umfasst, wobei der Speicher Anweisungen umfasst, die durch die mindestens eine Verarbeitungseinheit ausführbar sind, wobei die Anrufbearbeitungseinheit zu Folgendem betriebsfähig ist:
- Bestimmen, dass es sich bei einem Anruf von der mobilen Einheit (100) um einen Notruf handelt,
- Bestimmen eines Standorts der mobilen Einheit (100),
- Bestimmen mindestens eines Sensors (80-83, 91, 92), der sich in einer Umgebung der mobilen Einheit (100) nahe an der mobilen Einheit, aber nicht angeschlossen an die mobile Einheit (100), befindet,
- Bestimmen, ob der mindestens eine Sensor aktiviert ist, um Sensordaten aus einer Umgebung zu erfassen, in der sich mindestens ein Sensor befindet, wobei, wenn der mindestens eine Sensor nicht aktiviert ist, Folgendes erfolgt:
- Anfordern einer Aktivierung des mindestens einen Sensors,
- Anfordern der Erfassung von Sensordaten an dem mindestens einen Sensor,
- Anfordern einer Übertragung der erfassten Sensordaten an eine Notrufzentrale, die den Notruf bearbeitet.

13. Anrufbearbeitungseinheit nach Anspruch 12, die ferner betriebsfähig ist, um das Verfahren nach einem der Ansprüche 2 bis 4 oder 9 bis 11 durchzuführen, wenn diese direkt oder indirekt von einem der Ansprüche 1 bis 4 abhängig sind.

14. Notrufzentrale (300), die dazu konfiguriert ist, Notrufe über ein Mobilfunknetz (50) zu empfangen, wobei die Notrufzentrale einen Speicher und mindestens eine Verarbeitungseinheit umfasst, wobei der Speicher Anweisungen umfasst, die durch die mindestens eine Verarbeitungseinheit ausführbar sind, wobei die Notrufzentrale zu Folgendem betriebsfähig ist:
- Empfangen eines Notrufs von einer mobilen Einheit (100),
- Bestimmen, ob Sensordaten von mindestens einem Sensor (80-83, 91, 92), der dazu konfiguriert ist, Sensordaten aus einer Umgebung zu erfassen, in der sich die mobile Einheit befindet, zusätzlich zu dem Notruf empfangen werden, was Folgendes umfasst:
- Bestimmen, dass eine spezifische Art von Sensor zu aktivieren ist, um die Sensordaten zu erfassen,
- Anfordern einer Aktivierung eines Sensors einer spezifischen Art und einer Erfassung der Sensordaten, wobei der Sensor der spezifischen Art nahe an der mobilen Einheit ist, aber nicht an die mobile Einheit angeschlossen ist.

15. Notrufzentrale nach Anspruch 14, die ferner betriebsfähig ist, um das Verfahren nach einem der Ansprüche 6 bis 11 durchzuführen, wenn diese direkt oder indirekt von Anspruch 5 abhängig sind.

16. System, umfassend eine Anrufbearbeitungseinheit, wie in einem der Ansprüche 12 oder 13 erwähnt, und eine Notrufzentrale, wie in einem der Ansprüche 14 bis 15 erwähnt.

## Revendications

1. Procédé mis en œuvre au niveau d'une entité de gestion d'appels (200) configurée pour gérer un appel d'urgence d'une entité mobile (100) dans un réseau cellulaire (50) pour :
- déterminer (S51, S91) qu'un appel provenant de l'entité mobile (100) est un appel d'urgence,
- déterminer (S92) une localisation de l'entité mobile (100),
- déterminer (S53, S93) au moins un capteur (80-83, 91, 92) situé dans un environnement de l'entité mobile (100) proche de l'entité mobile mais non connecté à l'entité mobile (100),
- déterminer (S94) si l'au moins un capteur est activé pour collecter des données de capteur à partir d'un environnement dans lequel au moins un capteur est situé, dans lequel lorsque l'au moins un capteur n'est pas activés,
- demander (S54, S95) une activation de l'au moins un capteur,
- demander (S96) la collecte de données de capteur au niveau de l'au moins un capteur, et
- demander (S97) une transmission des données de capteur collectées à un centre d'appels d'urgence traitant l'appel d'urgence.

2. Procédé selon la revendication 1, dans lequel, s'il est déterminé qu'un appel provenant de l'entité mobile (100) est un appel d'urgence, la détermination si l'entité mobile a transmis une indication selon laquelle les données de capteur seront transmises en plus des données audio présentes dans l'appel, dans lequel, si l'indication n'est pas détectée, la demande à l'entité mobile d'envoyer des données de capteur en plus des données audio.

3. Procédé selon l'une quelconque des revendications 1 à 2, comprenant en outre les étapes consistant à :
- recevoir (S57) une indication en provenance d'un centre d'appels d'urgence (300) vers lequel l'appel d'urgence est dirigé, quel type de données de capteur doit être collecté pour l'appel d'urgence,
- déterminer au moins un autre capteur dans l'environnement du type de capteur identifié dans l'indication,
- demander (S59) la collecte de données de capteur au niveau de l'au moins un autre capteur.

4. Procédé selon l'une quelconque des revendications 1 à 3, comprenant en outre les étapes consistant à :
- déterminer au moins un paramètre de fonctionnement de l'au moins un capteur pour lequel la collecte de données de capteur a déjà été demandée, l'au moins un paramètre de fonctionnement devant être adapté,
- demander à l'au moins un capteur pour lequel la collecte de données de capteur a déjà été demandée, d'adapter au moins un paramètre de fonctionnement tel que déterminé.

5. Procédé mis en œuvre dans un centre d'appels d'urgence (300) recevant des appels d'urgence via un réseau cellulaire (50), le procédé comprenant les étapes consistant à :
- recevoir (S70, S101) un appel d'urgence provenant d'une entité mobile (100),
- déterminer (S72, S102) si des données de capteur d'au moins un capteur (80-83, 91, 92) configuré pour collecter des données de capteur d'un environnement dans lequel se trouve l'entité mobile, sont reçues, en plus de l'appel d'urgence, comprenant les étapes consistant à
- déterminer (S103) qu'un type spécifique de capteur doit être activé pour collecter les données de capteur,
- demander (S104) une activation d'un capteur du type spécifique et une collecte des données de capteur, le capteur du type spécifique étant proche de l'entité mobile mais non connecté à l'entité mobile.

6. Procédé selon la revendication 5, déterminant en outre au moins une réaction à initier en réponse à l'appel d'urgence reçu en tenant compte des données de capteur.

7. Procédé selon la revendication 5 ou 6, comprenant en outre les étapes consistant à :
- estimer une situation d'urgence pour laquelle l'appel d'urgence a été reçu,
- déterminer (S77) au moins un autre capteur à activer en fonction de la situation d'urgence estimée,
- demander (S78) une activation de l'au moins un autre capteur et une collecte de données de capteur par l'au moins un autre capteur.

8. Procédé selon l'une quelconque des revendications 5 à 7, comprenant en outre les étapes consistant à :
- déterminer au moins un paramètre de fonctionnement de l'au moins un capteur pour lequel la collecte de données de capteur a déjà été demandée,
- déterminer comment l'au moins un paramètre de fonctionnement doit être adapté, sur la base d'une estimation d'une situation d'urgence pour laquelle l'appel d'urgence a été reçu,
- demander l'adaptation de l'au moins un paramètre de fonctionnement tels que déterminés.

9. Procédé selon l'une quelconque des revendications précédentes, dans lequel les données de capteur comprennent au moins l'un des éléments suivants :
- des données générées par un nez électronique,
- des données générées par une langue électronique,
- des données générées par un œil électronique.

10. Procédé selon l'une quelconque des revendications précédentes, dans lequel les données de capteur comprennent des données générées par un capteur électronique identifiant au moins un arôme, une odeur, un gaz, une saveur.

11. Procédé selon la revendication 9 ou 10, dans lequel les données de capteur ont été générées à l'aide d'un capteur électronique qui a été formé à l'aide de l'apprentissage automatique.

12. Entité de gestion d'appels (200) configurée pour gérer un appel d'urgence d'une entité mobile (100) dans un réseau cellulaire (50), l'entité de gestion d'appels comprenant une mémoire et au moins une unité de traitement, la mémoire comprenant des instructions exécutables par l'au moins une unité de traitement, dans laquelle l'entité de gestion d'appels est opérationnelle pour :
- déterminer qu'un appel provenant de l'entité mobile (100) est un appel d'urgence,
- déterminer une localisation de l'entité mobile (100),
- déterminer au moins un capteur (80-83, 91, 92) situé dans un environnement de l'entité mobile (100) proche de l'entité mobile mais non connecté à l'entité mobile (100),
- déterminer si l'au moins un capteur est activé pour collecter des données de capteur à partir d'un environnement dans lequel se trouve au moins un capteur, lorsque l'au moins un capteur n'est pas activés,
- de demander une activation de l'au moins un capteur
- de demander la collecte de données de capteur au niveau de l'au moins un capteur,
- de demander une transmission des données de capteur collectées à un centre d'appels d'urgence traitant l'appel d'urgence.

13. Entité de gestion d'appels selon la revendication 12, étant opérationnelle en outre pour mettre en œuvre le procédé selon l'une quelconque des revendications 2 à 4 ou 9 à 11 lorsqu'elles dépendent, directement ou indirectement, de l'une quelconque des revendications 1 à 4.

14. Centre d'appels d'urgence (300) configuré pour recevoir des appels d'urgence via un réseau cellulaire (50), le centre d'appels d'urgence comprenant une mémoire et au moins une unité de traitement, la mémoire comprenant des instructions exécutables par l'au moins un unité de traitement, le centre d'appels d'urgence étant opérationnel pour :
- recevoir un appel d'urgence en provenance d'une entité mobile (100),
- déterminer si des données de capteur d'au moins un capteur (80-83, 91, 92) configuré pour collecter des données de capteur d'un environnement dans lequel se trouve l'entité mobile, sont reçues, en plus de l'appel d'urgence, comprenant les étapes consistant à
- déterminer qu'un type spécifique de capteur doit être activé pour collecter les données de capteur,
- demander l'activation d'un capteur d'un type spécifique et la collecte des données de capteur, le capteur du type spécifique étant proche de l'entité mobile mais non connecté à l'entité mobile.

15. Centre d'appels d'urgence selon la revendication 14, étant en outre opérationnel pour mettre en œuvre le procédé selon l'une quelconque des revendications 6 à 11 lorsqu'elles dépendent, directement ou indirectement, de la revendication 5.

16. Système comprenant une entité de gestion d'appels telle que mentionnée dans l'une quelconque des revendications 12 ou 13, et un centre d'appels d'urgence tel que mentionné dans l'une quelconque des revendications 14 à 15.
